(19) **Europäisches Patentamt / European Patent Office / Office européen des brevets**

(11) **EP 4 712 403 A1**

(12) # EUROPEAN PATENT APPLICATION

(43) Date of publication:
**18.03.2026 Bulletin 2026/12**

(21) Application number: **24382818.3**

(22) Date of filing: **16.09.2024**

(51) International Patent Classification (IPC):
*H04L 9/00* (2022.01)     *H04L 9/32* (2006.01)

(52) Cooperative Patent Classification (CPC):
**H04L 9/50; H04L 9/3218; H04L 9/3297**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Egea Escribá, Javier
46600 Alzira Valencia (ES)**

(72) Inventor: **Egea Escribá, Javier
46600 Alzira Valencia (ES)**

(74) Representative: **Hernández Sala, José Andrés
Plaza del Regne-11-1o-2a
46600 Alzira (ES)**

(54) **DECENTRALIZED NETWORK-BASED MEDIA REGISTRATION SYSTEM (SRCM)**

(57)     The present invention, called the Decentralized Network Based Media Content Registration System or SRCM, focuses on the authentication and verification of media content through a blockchain-based decentralized network. Using technologies such as a new consensus mechanism called PoZET, data encapsulation in CBOR format and Keccak256 hashing; the SRCM prevents alterations and bifurcations in the recorded data.

In addition to its application on mobile devices and computers, this system is extensible and applicable to the synchronization and coordination of IoT nodes in SmartCities, guaranteeing the integrity of critical data.

The SRCM also offers solutions to prevent the poisoning of Artificial Intelligences with artificially generated content, improving the quality of AI learning.

In addition, the system has the property of increasing its security, the greater the number of nodes it has.

This patent ensures the authenticity, security and validity of multimedia content in various technological environments.

The present invention sits at the intersection of several technical areas and industrial sectors. These include:
**1.** Blockchain Technology
**2.** Computer Security and Cybersecurity
**3.** Artificial Intelligence and Machine Learning
**4.** Internet of Things (IoT) and Smart Cities
**5.** Software Development and Mobile Applications
**6.** Media and Social Media
**7.** Regulation & Regulatory Compliance
**8.** Digital Forensics & Content Auditing

**EP 4 712 403 A1**

## Description

1- Field of Invention

The present invention, the Decentralized Network Multimedia Content Registration System or SRCM, sits at the intersection of several technical areas and industrial sectors. These include:

**1. Blockchain Technology:** The SRCM uses a blockchain to create a decentralized and immutable registry, guaranteeing the authenticity and veracity of multimedia content.

**2. Computer Security and Cybersecurity:** The invention addresses data integrity and fraud prevention, ensuring that multimedia content is not tampered with or falsified.

**3. Artificial Intelligence and Machine Learning:** The system can help prevent the poisoning of AI algorithms with fake data, improving the quality of machine learning and content generation.

**4. Internet of Things (IoT) and Smart Cities:** SRCM is applicable to the synchronization and coordination of IoT nodes in smart cities, ensuring the authenticity of data transmitted between connected devices.

**5. Software Development and Mobile Applications:** The main implementation of the SRCM includes the development of mobile applications and backend services that facilitate the verification of content in real time.

**6. Media and Social Networks:** The system provides a solution to verify the veracity of multimedia content distributed on social networks and communication platforms.

**7. Regulation and Compliance:** By ensuring the authenticity of content, SRCM can also be useful in complying with rules and regulations related to data transmission and storage.

**8. Digital Forensics and Content Auditing:** The system can be used for auditing and forensic analysis of digital content, providing an additional layer of security and verification.

The SRCM stands out for its transversal applicability in different industries, addressing critical issues related to the authenticity, security and veracity of digital content in an era of increasing digitalization and interconnectivity of things.

2- Background of the Invention

**Technical Problem the Invention Seeks to Solve**

In the modern digital age, the veracity of multimedia content is a growing concern. With the expansion of social networks, websites and instant messaging systems, it has become common to find images, videos and audios that have been manipulated or fabricated. This situation is exacerbated by the development of technologies such as artificial intelligence, which allows the creation of deepfakes, i.e. extremely realistic but completely fake multimedia content. This content can be used to misinform, defame or commit fraud, creating a digital environment where trust in information is seriously compromised.

**Existing Solutions and Their Limitations**

**Manual Verification Methods:**

Description: They involve manually reviewing content by human experts or using basic editing tools to detect alterations.
Limitations: They are extremely slow, expensive, and non-scalable, especially considering the massive volume of content generated daily.

**Deepfake Detection Software:**

Description: They use machine learning algorithms and digital forensics techniques to identify manipulations in videos and audios.

Limitations: These algorithms, although advanced, can be circumvented by increasingly sophisticated deepfake techniques. In addition, they require significant computational resources and do not guarantee real-time verification.

### Fact-Checking Platforms:

Description: Organizations and websites dedicated to verifying the veracity of news and content shared online.
Limitations: Similar to manual methods, these services are slow and rely on human intervention. They cannot efficiently handle the volume of content, and their response may be too late to stop the spread of false information.

### Blockchain Systems for Data Recording:

Description: They use blockchain to create an immutable record of transactions or events.
Limitations: While blockchain technology offers a robust solution for data integrity, its implementation for specific media content has not been optimized. Existing systems are not designed to efficiently handle the diversity and volume of multimedia data.
In addition, all the consensus mechanisms applied in the blockchain have the intervention of the users of the chain themselves for the validation of the data that is registered in the blockchain.

### Limitations of Existing Solutions

Scalability: Most solutions can't scale adequately to handle the massive volume of content generated in real-time.
Accuracy and Efficiency: Deepfake detection tools can be fooled and do not always deliver accurate results.
Response Time: Manual methods and fact-checking platforms cannot provide quick verifications, allowing false content to spread before being debunked.
Costs: Reliance on human intervention and high computational resources make existing solutions expensive and difficult to implement at scale.

### Innovation of the Present Invention

The present invention, the Decentralized Network Multimedia Content Registration System or SRCM, seeks to overcome these limitations through a combination of advanced technologies such as blockchain, Keccak512-type hashing, CBOR-type data format, and a specific consensus mechanism (PoZET). SRCM ensures the authenticity of multimedia content in real time, providing a scalable and efficient solution for continuous and distributed data verification. This invention is applicable both in everyday digital environments and in the coordination of IoT nodes in Smart Cities and in the protection against data poisoning in artificial intelligence systems, allowing independent verification of human intervention and improving trust in digital information.

3- Detailed Description of the Invention

This section explains in detail each of the components that make up the SRCM (Multimedia Content Registration System based on Decentralized Networks). Each of these components plays an essential role in the functionality and efficiency of the system, ensuring that multimedia content is recorded and verified accurately and securely. To provide an overview, below is a list of the components of the SRCM:

### Application (User Interface)

The application is the primary access point for system users. Through an intuitive and easy-to-use camera interface, users can interact with the SRCM to take photos, record them, check others, and view multimedia content. The app allows users to capture content directly from their devices, record it on the network, and verify its authenticity. The interface is designed to be accessible to users of all technical levels, providing simplified navigation. In addition, the app includes advanced security features, such as data encryption, to protect the privacy and integrity of the recorded content.

### Extracted Content (CE)

Extracted Content (EC) is the term used to refer to multimedia content that has been captured directly from reality and recorded in the system. Once the content has been captured, it is processed to generate a unique hash using the Keccak256 algorithm. This hash is used as a unique identifier for the content, ensuring that any alterations to the original content can be easily detected. The CE is essential to the operation of the SRCM, as it provides the data base or structure on which the authenticity of the content is verified.

**PoZET Consensus Mechanism**

The PoZET (Proof of Zero-Knowledge Elapsed Time) Consensus Mechanism is a key innovation of the SRCM. This mechanism ensures that all nodes on the network agree on the current state of the blockchain. Unlike traditional consensus mechanisms, PoZET is based on "Zero Knowledge" proof of key transfer, which significantly reduces the danger of Man-In-The-Middle attacks. PoZET is crucial to maintaining the integrity and consistency of the blockchain, ensuring that all content records are accurate and verifiable.

**Anti-Fork System**

The Anti-Fork System is an essential component of the SRCM that prevents the creation of divergent branches on the blockchain. This system uses an Anti-Fork Algorithm on Blockchain Networks to ensure that all transactions and records are kept on a single, continuous and verifiable chain.
The Anti-Fork System is vital to maintaining the uniqueness and consistency of the blockchain, preventing data duplication issues and ensuring that all content checks are performed on a single source of truth.

**Socket Communication Protocol**

The Socket Communication Protocol is the structure or order of messages transmitted in Client-Server Socket communication, the medium through which network nodes communicate with each other. This protocol allows for the secure and efficient transmission of data between nodes, ensuring that all relevant information is shared quickly and reliably.
The protocol is designed to handle multiple simultaneous connections, providing a robust infrastructure for the SRCM's P2P network. In addition, it includes encryption mechanisms to protect the integrity and privacy of the transmitted data.

**P2P Node Network**

The P2P (Peer-to-Peer) Node Network is the underlying structure that supports the SRCM. This network is composed of multiple geographically distributed nodes, each of which plays a role in capturing, recording, and verifying multimedia content.
The P2P network is highly scalable and resilient to failures, making it ideal for SRCM. Each node in the network has the capacity to store and process data, allowing for an equal distribution of the workload and ensuring that the system can handle large volumes of content. P2P networking also facilitates data redundancy, ensuring that content is available even if one or multiple nodes fail.
In short, each of these components works together to provide a robust and efficient system for media verification. Not only does SRCM enable users to securely record and verify content, but it also offers a scalable and resilient solution for data management across a distributed network.

3.1- Application (User Interface)

The user access point to the SRCM (Multimedia Content Registration System) is a normal camera application, as if it were any other, with a clear and minimalist interface to avoid any type of usability complication. For the user there is no difference between this application and any that has already been used before, except for a section in which an image, video or audio can be provided to verify whether it was registered in the system at the time of its creation or not.
The fact that there is no difference to the naked eye increases the user's comfort when using the system, since the change in their image capture routine will be practically non-significant.
When launching the application for the first time, the user's attention is required so that they have the possibility to accept the permissions required by the application, as in any other, in addition to reading and understanding the terms to which they are subjected when using the system.
However, it is important to reiterate the fact that all the information stored in the blockchain is encrypted by means of Hash functions, which only allow encryption and never a decryption of the key itself. This always maintains the veracity of the data, as well as the anonymity or security of the data.
Only with the original content, you could arrive at the same key in order to compare them.

3.2- Extracted Content (CE)

CE **(Extracted Content)** is the data structure designed for multimedia content created by devices with peripherals (integrated or not) suitable for extracting data from reality, regardless of the type of data extracted, such as videos, images or audios.

The process of creating a CE begins the moment the device or "U" node turns on the camera application. At this point, a background service, the SRCM, starts as if it were a location service. The service performs a sweep on the device detecting all the peripherals available on that device.

*If the service were turned off or disabled in* some *obviously malicious way, the camera and audio applications would not work, requesting to start the SRCM service* as *in any other application that requests to start certain services in the background.*

*Any media created by a device with the service turned off would be classified* as *"unverified."*

When a capture event is detected in the "U" camera or microphone, the service makes a copy of the captured data, even before it is saved in the device's own internal memory, and translates it into the CE data structure (Sec. 3.2.1) to save it in a file in the device's internal memory.

The CE data structure is formed from a simple process in which all the metadata of a multimedia content, as well as each value of the samples (pixels or digital audio samples) are encoded in CROP a binary data structure similar to JSON, however, it is tighter Then, taken separately, they are combined with a 2048-bit-long Nonce obtained through the PoZET consensus mechanism (Sec. 3.3) and a Keccak256 hash is made with output keys with a length of 2048 bits, to each of the two data strings.

3.2.1- Data packet of an CE

All this data of the multimedia content will be stored in a data packet [Fig. 1] (a string of 1025 bytes) that will have the following structure:

- 65 bits for the **TimeStamp** or Timestamp at which the block was created. Its value is automatically collected from the current time value of the system on the device that creates the block. This value refers to the number of milliseconds that have elapsed from January 1, 1970 to the time the timestamp is captured.

- 2048 bits for the key resulting from the **Header or Header of the PH Parent block$_b$.** This is the "Block Hash" key of the immediately preceding block in the chain.

- 2048 bits for the **IK u digital identification key** that each device that creates CE will have. The key will be supplied by the SRCM itself at the time the device is added to the network.

- 2048 bits for the key resulting from the **hash of the data of the entire BH$_b$** block. It is the combination of each of the encrypted keys for each piece of data in the CE (or SRCM_BLOCK). This allows a certain level of security to be maintained on the same block, without depending on any other block, so that none of its data can be altered.

- 2048 bits for the key resulting from the **complete MR b metadata.**

- 2048 bits for the key resulting from the **raw data extracted RD$_b$.**

- 4 bits for the **DT b data type** that is (Image [0001], Video [0010], Audio [0011], Corrupt CE [0000], etc.). This concept is analysed in more detail in the section "3.2.2- Types of EC block"

- 4 bits for the **state V$_b$ in which the block was uploaded** : "verified" (0001), "unverified" (0000)

- 2048 bits for **the key of** a **Nonce** (pseudo-random one-time number).

| Estructura de un bloque CE | | | | | | | | |
|---|---|---|---|---|---|---|---|---|
| TimeStamp | ParentHeader PHb | IdentificationKey IKu | BlockHash BHb | MetadataResult MRb | RawData RDb | DataType DTb | VerificationState Vb | Nonce |
| 64 bits | 2048 bits | 2048 bits | 2048 bits | 2048 bits | 2048 bits | 4 bits | 4 bits | 2048 bits |

Fig. 1 Structure of a CE Block.

3.2.2- CE Block Types

The blocks used in the SRCM blockchain have different functionalities depending on the "DataType" they contain in their data:

**Data Types 01/02/03:** This type of data refers to Images, Videos and Audios, respectively. The operation of the block is the same as the one explained above.

It should be noted that **MRb** and **RDb,** contain the metadata of the image, video or audio (data that can be read on any device by accessing the information of the multimedia content stored on it) and the bytes of each of the pixels, pixels of each frame or audio sample that make it up, respectively.

**Data Type 04:** This is a block that refers to a node. The block has been embedded as a new link in the chain due to an "Initiation" event where a new device has first initiated the SRCM. The system registers, through a foreign node, the "initiated" node in the chain, granting it a unique identification key.

In this case, the **IKu** is the key created for the new node. The **MRb** contains the key of the device that was already integrated into the SRCM and has "booted" the new node. It is the node responsible for validating this entry into the system.

The **RDb** contains the port number assigned for the client-server connection formed between the two devices.

**Data Type 05:** This is a block that refers to the SRCM code itself. The block has been embedded as a new link in the chain due to an "SRCM Update" event where the SRCM has been updated for some reason. The system registers the application code itself, mobile, desktop or of any kind; a block of type 05 with the **RDb** parameter containing the bytes of the code encrypted with a Hash512. Similarly, the **IKu** contains the "Identification Key" of the node that has embedded the block in the blockchain.

This type of block is very important since it serves to check that the code installed in the different nodes is the same as the original, since with this method possible attacks on the system are avoided by trying to change the methods of the program itself. This verification is reflected in the first type of event of the Socket communication protocol that we will see in the section "3.6- SRCM Client-Server Communication Protocol"

3.3- Proof of Zero-knowledge Elapsed Time

Once the extracted data has been copied to the CE, before being saved in the internal memory, the device or node "U" makes a request to generate a new block in multicast to the nearest $N_{or}$ neighbors of the network, sending them the data for the created CE.

$N_{or}$ neighbors are defined as the neighbors that each node has stored in a P2P connection table, where $N_u = N_{Total}/DRed+1$.

At this point, the **Proof of Zero-knowledge and Elapsed Time (PoZET) consensus mechanism begins.**

The neighbors that receive the request generate a pseudorandom number that indicates the wait or *sleep time* of each node.

The "V" node that wakes up first will request an arbitrary string of bytes from the "U" node, sending it a string of 2048 bits belonging to a Nonce created by "V" for the new block. Node "U" must provide node "V" with the bytes requested.

It is evident that both node "U" and node "V" must use the Nonce to combine it with the Ce and make a Hash. From this hash, the byte strings will be used for checking.

The process is repeated 5-10 cycles changing the bytes that are requested in each cycle.

If all checks agree, the CE is legitimate and will be included in a block on the blockchain with status $V_b = 0001$.

3.4- Anti-Fork System

The anti-fork system (Fig. 2) tries to avoid the existence of multiple chains in the SRCM network, since the best way to maintain the legitimacy of the blocks is to contain them in a single chain that acts as a single ledger in the network, without any version that differs from the "trunk".

El nodo "V" envía su cadena al recibir una actualización

Llega 1 cadena al nodo "U" y la compara con la suya

¿Tienen el mismo tamaño?

No — Descartar por ahora el último bloque sobrante ⤏ Guardar el bloque en segundo plano en el nodo "U"

Si

¿Coinciden todos los Parent Hash de las dos cadenas?

Si — Añadir los nodos sobrantes en el orden en que estaban originalmente → Compartir con "V" la cadena resultante para que actualice su estado

No

Mismo ParentHash

| Cadena "U" | Cadena "V" |
|---|---|
| Bloque 77382 | Bloque 77382 |
| Bloque 83762 | Bloque 58392 |
| Bloque 93844 | Bloque 39099 |
| Bloque 64853 | Bloque 29472 |

Se comparan todos los bloques de Cho(U) y Cho(V):

$i = length - 1$

$Cho(U)[i].parentHash == Cho(V)[i].parentHash$

$i = 0$

Retroceder hasta el bloque en las dos cadenas que tengan el mismo Parent Hash, si no hay, se realiza desde el primer bloque de las dos cadenas

Comparar los RDu de las dos listas entre sí hacia el más nuevo.

Se comparan todos los bloques de Cho(U) y Cho(V):

*j.

$k = j$

$Cho(U)[j].rawData == Cho(V)[k].rawData$

ó

$Cho(V)[j].rawData == Cho(U)[k].rawData$

$k++$

$j++$

*j=índice de los bloques donde PHb coincide

Se descarta la cadena de Cho(V) y queda registrada la de Cho(U)

No — ¿Coincidió algún PHb?

No — ¿Coinciden?

Si

Si

Se conservan los dos bloques Cho(U)[j] y Cho(V)[j] en orden de valor decimal de TimeStamp ascendente

El Parent Hash de los bloques registrados se actualiza al nuevo bloque padre que adquieren:

$Cho(U)[i].parentHash = Cho(U)[i-1].blockHash$

donde "i" es el índice del bloque conservado.

Para ello se registra dos veces el bloque al que se deba cambiar el parentHash. La primera como estaba orginalmente, la segunda con el parentHash actualizado.

*Fig. 2 Anti-Fork System Process Flowchart*

3.5- Distribution and Chain Upgrade

Each of the nodes will be connected to neighboring N which, in turn, will be connected to their respective neighboring N, where $N = N_{total} / DRed+1$.

These neighbors are selected according to the proximity in the $IK_n$ keys of each node to the value of their 256-byte strings. Node "U" will connect to its $N_{or}$ neighbors that have $IK_n$ closer.

When a node receives an upgrade, such as disconnecting from the network, adding a new block, searching for a block in the chain, etc.; it will communicate this update to all its neighbors, regardless of whether it comes from another node or from itself.

Figure [Fig. 4] shows how cyclic peering exists in a P2P network of this type, since what is shown in Figure 3 [Fig. 3] with the neighborhood structure of the network, applies to each "U" node in the network, with "U" being identified as each node by itself.

*Fig. 3 SRCM Network Overlay Neighborhood Structure*

*Fig. 4 Cyclic Pairing in the SRCM Network Overlay*

Thanks to cyclic pairing, there are different alternative routes by which a node can reach its destination, although there are more hops on these alternative routes than on the main route.

The main route by which a node "U" will communicate to reach another "D" will be the one that, based on the IK $keys_{v,\ w}$ of each node "V" or "W" is closest to the IK $key_d$ of the destination node "D".

Each of the nodes connected to the network registers the messages that have been transmitted by themselves, to avoid transmitting them again through the network constantly, solving the problem of generating loops in the network.

The chain is distributed using the TimeStamp or timestamp in which each block was created. The number of blocks that each node stores is given by the number of nodes in an active state in the network. To avoid any situation in which the information could be lost, there is redundancy in the storage of the blocks. That is, the same block exists on different nodes.

All nodes store a balanced number of blocks so that there is redundancy, but also not too many blocks stored. To summarize it in a formula we could deduce:

$$nb = (C_s/N_{active}) + (C_s/N_{active})\ /2$$

Where "$n_b$" is the number of blocks each node stores, "Cs" is the size of the chain in number of blocks, and "$N_{active}$" is the number of active nodes in the network.

This formula is used for the redistribution of blocks throughout the network. This occurs when a node is activated or deactivated on the network, or a new block is added to the chain.

3.6- SRCM Client-Server Communication Protocol

The Client-Server Socket communication protocol in the SRCM consists of different events that can occur throughout the lifetime of the system.

The first event focuses on the opening of communication between the two newly bonded P2P nodes or peers at the IP layer. For this event to occur between two nodes, it is necessary that one of them was not previously connected to the network. This node will be referred to as the "initiated" node. The started node is verified by the child nodes (socket servers to which it is connected) of the node.

The second event focuses on the moment in which any node has communicated

*Fig. 5 Communication Socket: Event 1*

to its neighbors that a capture has been taken using the device's camera. At this time, a message exchange takes place where the information of the new block introduced in the chain is verified. This is why two phases can be deduced in this event:

The first phase is when the node captures content with the camera and communicates it with all its neighboring nodes and through PoZET a new block is created and embedded as the last "link" in the chain.

Fig. 6 Communication Socket: Event 2

The second phase begins once the block has been added to the chain, at which point the node that has included the block (the verifier node) communicates it with all its neighbors to check that it has been included correctly according to the protocol of any blockchain. The most important point in this phase is the verification that the new block has a reference to the immediately preceding block.

The process is very simple, the server communicates with all of its clients, no matter what port they are connected to, and communicates its registered blockchain. Automatically the clients execute the anti-fork mechanism.

The third event focuses on the moment in which any node communicates to its neighbors that it is going to disconnect from the network. A node will stay connected to the network while it is with the SRCM camera app open. When suspending the application, the device performs one last function and that is this communication to all its neighbors that its connection status on the network is going to change to "disconnected".

**Comunicación Socket: Evento 3**

| Cliente | Servidor |

Mensaje

"EXIT_SRCM"

"SRCM_CHECKOUT"

"ACK_SERVER"

"CHECK_BLOCKCHAINS"

"ACK_CHECK_BLOCKCHAINS"

SRCM_BLOCKCHAIN: List<SRCM_BLOCK>()

Anti-Fork

"BLOCKCHAIN_UPDATED", List<SRCM_BLOCK>()

"ACK_SERVER"

Server Disconnect

*Fig. 7 Communication Socket: Event 3*

There is really no such state in an active way, the device will simply cease to be available to the rest of the nodes, until the application is reopened, where the first event of the protocol would be executed.

It should be noted that the topology of the overlay network (the logical network formed from the socket clients and servers between peers) is inverted to the topology of the IP layer in the P2P network.

Whereas, in this layer, each node has several child nodes connected, in the client-server socket layer each node has several "parent" nodes. The server would act as the logical parent node for each of the nodes that are connected to that server. In order for different nodes to connect to the same device, thus making a client-server connection, it is necessary for servers to adopt or listen through different ports to cover all their clients.

The assignment of ports to the servers is done procedurally, as well as the assignment of ports to the clients. This occurs during the first event in the Media Content Registration System (SRCM) communication protocol.

4- Example of Realization of the Invention

The implementation of the invention itself is very simple, since its design has been explicitly created for interoperability between different types of devices, as well as having rapid scalability and a high level of security.

1. The main application of the invention is its implementation in mobile and desktop applications to cover the maximum possible number of devices and protect the integrity and veracity of multimedia content that has been directly extracted from reality.

2. The invention could also be applied in the protection of a company's private data and digital content. This implementation would be done by developing a desktop application for the company's computers and a mobile application for the company's own mobile devices. With the system it is possible to safeguard the immutability of the data, in order to increase the security of said data as much as possible, making the execution of Man-In-The-Middle attacks, among others, less likely.

3. The system itself could be used by the Artificial Intelligences themselves to be able to automatically differentiate the content that has been extracted directly from reality, thus improving the quality of the data used by the AIs themselves for learning. It is even possible to use the system to create a separate blockchain in which AI-created content is recorded, to differentiate any content that has been directly created by AI.

4. Another example of realization would be to implement the system in the synchronization and organization of IoT node data in Smart Cities. An application would be developed for nodes with Wi-Fi connectivity and geolocation which would simply record the data on the corresponding blockchain. That same application would serve to verify each of the data that are used by the same nodes. The latter could also be done externally using a second application.

5- Terminology

**Forks:** In the context of blockchains, a fork is an event in which the data on the chain itself diverged into two distinct branches. This could be because two nodes have introduced a block with the same "parent header", or even that a block has been introduced that makes no sense at all in terms of data order, which would imply a plausible attack on the integrity of the data. There are different possibilities such as leaving one of the branches. In this project, the intention is to merge the two branches, recording any errors or changes, if any.

**Blockchain:** A Blockchain is a kind of ledger, where each block stores unique and immutable information. This information is encrypted and depends on the last block (the last movement recorded in the account book). In addition, the ledger, the blockchain, is distributed throughout all the nodes that make up the network, thus creating backups of it, making it difficult to alter maliciously.

**Parent Block Header:** The header in an information packet refers to the data that precedes the body of the message. This data is used to redirect the message, locate it, confirm that the data arrives correctly, etc. In the context of this project, when we talk about the header of the parent block we refer to the key resulting from the combination of the Hash functions that are performed on each parameter of the CE (or SRCM_BLOCK). This key is called "Block Hash" because it is the encrypted key that contains all the data in the block. For a new block, its "Parent Header" will be the "Block Hash" of the immediately preceding block.

**IP layer:** In telecommunications terms, the IP layer is a way of referring to the type of organization and functions that are carried out regarding the IPs available to each device that can be connected to any type of network. In this case, the IP layer would identify the nodes with each other, however, to organize the information and nodes, it is possible to use a higher layer such as that of a P2P network.

**CBOR:** Concise Binary Object Representation (CBOR) is a data format whose design goals include the possibility of extremely small code size, fairly small message size, and extensibility without the need for version negotiation. (Bormann & Hoffman, 2020)

**Sponge construction:** In the context of cryptography, sponge construction is a mode of operation, based on a fixed-length permutation (or transformation) and a padding rule, that constructs a function that assigns a variable-length input to a variable-length output. It takes an element as an input of integer (non-decimal) even, and returns an output element with chosen length also integer and even.

**Hash:** In computer science, the term hash refers to a function that takes a string of text as input and compresses it into another string of text as output. This function satisfies certain security criteria, so they are used for authenticity, digital keys, steganography (hiding information within another message to avoid detection), generation of pseudo-random numbers, etc.

**Keccak 256/512:** Keccak is a versatile cryptographic feature. Better known as a hash function, it can also be used for authentication, encryption (authentication), and pseudo-random number generation. Its structure is an extremely simple sponge construction and internally it uses the innovative cryptographic permutation Keccak-f, where f is the number of bits that the function takes as blocks for each cycle or permutation. The value 256 or 512 refers to the length of the resulting output key, in bits.

**Consensus Mechanism:** The consensus mechanism for a blockchain is a procedure in which the peers (or nodes) of a blockchain network reach an agreement on the current state of the data on the network. This agreement is usually carried out by rewarding or punishing such nodes through cryptocurrencies. Through this, consensus algorithms establish reliability and trust in the blockchain network.

**C.M. of Elapsed Time:** PoET (Proof of Elapsed Time) is a consensus mechanism by proof of elapsed time as its name suggests. This is to say that the proof that nodes are unbiased in terms of verifying blockchain data is about the randomness of elapsed time. When a node wants to upload a block to the network, a message with its intention is sent to all the nodes to which it is connected and they mark a pseudo-random timeout. The first node to respond, once its pseudo-random time has elapsed, will be in charge of verifying the data to be embedded in the blockchain. In this method, the mechanics of rewarding or punishing such nodes through the use of cryptocurrencies are followed.

**Node:** In networks and telecommunications, nodes are each of the devices that are connected to the network and that can send or receive data. Some types of nodes are computers, printers, mobile devices such as smartphones, a router, etc. If it is a P2P network, these nodes are also referred to as "peers".

**Nonce:** A nonce is an arbitrary number that can be used only once in a cryptographic communication. This is usually a random or pseudo-random number issued in an authentication protocol to ensure that old communications cannot be reused in playback attacks. They can also be useful as initialization vectors and in cryptographic hash functions.

**Zero Knowledge Test:** Based on one of the stories of the 1001 Nights: Alibaba and the 40 Thieves. Testing consists of verifying that a target has certain information, without revealing what that information is. The story tells how there is an "O" shaped cave with a single entrance that forks into two paths: "A" and "B". To pass through the inner arch of the cave, it is necessary to open a door with a magical password. To prove that the target has the password without revealing it, the target is made to pass the following test an arbitrary number of times: You enter by one of the random paths, but once entered, you must exit by the path chosen by the examiner.

The probability of it happening by pure chance, without having the key that opens the door to the end of the cave, decreases exponentially as cycles of this test are carried out.

In this case, the sniffer node requests an arbitrary number of bits from the target node, for an arbitrary number of cycles. If the target node responds well, then the information it has agrees with that of the examining node.

**P2P network:** "A P2P network is a distributed system by nature, without centralized control." As could be the case of a company's server, which centralizes the data and functions that are carried out. "Nodes with symmetry in the client and server roles form a self-organizing surface network, above the IP layer network."

**Server/Client Socket:** "This term, Socket comes from a metaphor of the electricity/telephone socket in which the sockets act as interfaces that connect to each other through a network." This refers to a socket server acting in the same way, activating different "plugs" to the same destination, the server, to which a client can connect. A port number is assigned to each socket, which differs from the other possible port numbers for that server. This is why, if a server opens and proceeds to listen through different sockets, each with its own port, it has the ability to accept and communicate with different clients, while maintaining the same functions and data sets.

1. **Decentralized Network Based Multimedia Content Registration System or SRCM:** The SRCM is a system designed to verify the authenticity of multimedia content on a decentralized network. It uses a combination of blockchain, CBOR data structures, Keccak512 hash, and a PoZET consensus mechanism. The system prevents forks in the network by means of an Anti-Fork algorithm and communicates the nodes through a Socket communication protocol. It applies to both mobile devices and computers, ensuring that the recorded multimedia content is authentic and not altered.

2. **SRCM in SmartCities:** In the context of Smart Cities, SRCM has the ability to organize IoT devices in a geolocation-based P2P network. This approach ensures that critical data generated by IoT devices is handled securely and efficiently, using the PoZET consensus mechanism and Anti-Fork system to maintain network integrity and security.

3. **Method to avoid AI poisoning:** This method would use the SRCM to verify multimedia content before it is used to train AI. By ensuring that only authentic and verified data enters the learning system, the quality of AI-generated content is improved and the recycling of false information is prevented.

4. **Mobile App:** The developed mobile app will allow users to record and verify media content in real-time. With an intuitive interface and advanced verification capabilities, this app connects to the SRCM network and makes it easy to authenticate the recorded media content.

5. **Desktop App:** The developed desktop app will allow users to record and verify media content in real-time. With an intuitive interface and advanced verification capabilities, this app connects to the SRCM network and makes it easy to authenticate the recorded media content.

6. **Proof of Zero-Knowledge Elapsed Time:** This consensus mechanism avoids the use of cryptocurrencies and any kind of intermediaries for the aproval and autentication process in the system.

7. **Anti-Fork Algorithm:** The Anti-Fork algorithm detects and resolves potential forks in the blockchain, ensuring that only one valid blockchain is maintained. This algorithm optimizes consensus on the network and prevents data duplication.

**Claims**

1. As the main claim, the **Multimedia Content Registration System based on Decentralized Networks or SRCM is presented,** which includes:

   - A decentralized network of P2P nodes.
   - A PoZET consensus mechanism.
   - An Anti-Fork system.
   - A Socket communication protocol.
   - Integration with mobile devices and computers.
   - Ability to verify the authenticity of multimedia content extracted from reality.

   This system distinguishes the authenticity of content on social networks, websites and instant messaging systems, providing an immutable record of said content at the time of being extracted from reality.

2. It is claimed that the **SRCM is applicable to the coordination and synchronization of IoT nodes in Smart Cities, characterized by**:

   - A P2P network organized by geolocation and strategic position in the topological tree.
   - Ability to handle large volumes of data generated by IoT devices.
   - Improved security through the use of the PoZET consensus mechanism and the Anti-Fork system.

   This system enables the verification and synchronization of critical data in smart urban infrastructures, ensuring the authenticity and integrity of the information.

3. It is claimed that the **SRCM is applicable to prevent the poisoning of Artificial Intelligences with content created by themselves,** which includes:

   - A standard for recording media content on a decentralized blockchain.
   - Verification of the origin of multimedia content.
   - Secure storage of data in blockchain blocks.

   This method ensures that artificial intelligences are only trained on verified and authentic data, thus avoiding the recycling of AI-generated content and improving the quality of learning.

4. It is claimed that the **SRCM is implementable in a mobile application for the verification of multimedia content,** which includes:

   - An intuitive user interface.
   - Capabilities to record media in real-time.
   - Functionality to connect to the SRCM network and verify the authenticity of the content.

   This app allows mobile users to record and verify media content efficiently and securely.

5. It is claimed that the **SRCM is implementable in desktop application for the verification of multimedia content,** which includes:

   - An intuitive user interface.
   - Capabilities to record media in real-time.
   - Functionality to connect to the SRCM network and verify the authenticity of the content.

This application allows computer users to record and verify media content efficiently and securely.

6.  Having described the nature and scope of the invention and how to implement it, the **Proof of Zero-Knowledge Elapsed Time or PoZET consensus mechanism is claimed as exclusive right and property,** which includes:

    - Optionality of integrating a cryptocurrency, normally necessary, for the operation of the consensus mechanism.
    - Non-existence of human intermediaries or intermediaries of any kind, external to the system's own automated algorithm.
    - Immediate validation of the data entered into the system's blockchain.

    Observing the fact that the current **consensus mechanisms** present in Blockchains consist of methods of trust by means of rewarding or punishing their nodes using cryptocurrencies, it is decided to **create a new consensus mechanism that does not require the use of cryptocurrencies** for its operation.

    *[A Consensus Mechanism is a procedure in which the peers (or nodes) of a blockchain network reach an agreement on the current state of data on the network. This agreement is usually carried out by rewarding or punishing such nodes through cryptocurrencies. Through this, consensus algorithms establish trustworthiness and trust in the blockchain network.]*

7.  Having described the nature and scope of the invention and the manner in which it was put into practice, the **Anti-Fork Algorithm for Blockchain Networks is claimed to be of exclusive right and ownership,** which includes:

    - Detecting and resolving potential forks in the blockchain.
    - Maintaining a single valid blockchain.
    - Optimizing consensus on the network using PoZET.

    This algorithm prevents the existence of multiple branches of data, ensuring the consistency and security of the blockchain.

    These claims reflect the innovative features of SRCM and its potential for applications beyond the verification of multimedia content, including the coordination of IoT nodes in Smart Cities and the protection of Artificial Intelligence against false content.

# EUROPEAN SEARCH REPORT

**Application Number**

EP 24 38 2818

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 621 144 A (NCHAIN LICENSING AG [CH]) 7 February 2024 (2024-02-07) * abstract * * pages 1-6 * * pages 12-15 * * pages 25-45 * * figure 1 * | 1-7 | INV. H04L9/00 H04L9/32 |
| A | CN 110 889 264 A (TENCENT TECH SHENZHEN CO LTD) 17 March 2020 (2020-03-17) * abstract * * "Summary of the invention" * | 1-7 | |
| A | CHEN LIN ET AL: "On Security Analysis of Proof-of-Elapsed-Time (PoET)", 7 October 2017 (2017-10-07), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 282 - 297, XP047451209, ISBN: 978-3-540-74549-5 [retrieved on 2017-10-07] * abstract * * Chapter 1: "Introduction" * * Chapter 2: "Blockchain and PoET with Trusted Computing" * | 1-7 | TECHNICAL FIELDS SEARCHED (IPC) H04L |

The present search report has been drawn up for all claims

| Place of search | Date of completion of the search | Examiner |
|---|---|---|
| Munich | 12 February 2025 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 38 2818

This annex lists the patent family members relating to the patent documents cited in  the above-mentioned European search report.
The members are as contained in the European Patent Office EDP file on
The European Patent Office is in no way liable for these particulars which are merely given for the purpose of information.

12-02-2025

| Patent document cited in search report | | Publication date | Patent family member(s) | | Publication date |
|---|---|---|---|---|---|
| GB 2621144 | A | 07-02-2024 | GB | 2621144 A | 07-02-2024 |
| | | | WO | 2024028077 A1 | 08-02-2024 |
| CN 110889264 | A | 17-03-2020 | NONE | | |

For more details about this annex : see Official Journal of the European Patent Office, No. 12/82